# EUROPÄISCHE PATENTSCHRIFT

(11) **EP 3 069 590 B1**
(45) Veröffentlichungstag und Bekanntmachung des Hinweises auf die Patenterteilung: **06.05.2020**
(21) Anmeldenummer: 16160562.1
(22) Anmeldetag: 16.03.2016
(51) Int. Cl.: A01B 29/04

(54) **BODENBEARBEITUNGSVORRICHTUNG**
SOIL CULTIVATION DEVICE
DISPOSITIF DE TRAITEMENT DE SOL

(30) Priorität: 16.03.2015 DE 202015101330 U
(43) Veröffentlichungstag der Anmeldung: 21.09.2016
(73) Patentinhaber: Hendlmeier, Konrad, 93107 Untersanding (DE)
(72) Erfinder: Hendlmeier, Konrad, 93107 Untersanding (DE)
(74) Vertreter: Glück Kritzenberger Patentanwälte PartGmbB

(56) Entgegenhaltungen:
- EP-A1- 2 225 924
- DE-A1- 2 439 595
- US-A- 1 696 654
- US-A- 2 845 015
- US-A- 2 959 201
- US-B1- 6 968 907

## Beschreibung

Die Erfindung betrifft eine Bodenbearbeitungsvorrichtung gemäß dem Oberbegriff des Patentanspruches 1.

Bodenbearbeitungsvorrichtungen umfassend einen Trägerahmen und zumindest eine drehbar am Trägerrahmen gelagerte Schneidwalze, die zum Zerkleinern von Ernterückständen oder einer bestehenden Begrünung einer landwirtschaftlichen Nutzfläche ausgebildet ist, sind hinlänglich aus dem Stand der Technik bekannt.

Neben den erwähnten Schneidwalzen sind außerdem Walzvorrichtungen, wie beispielsweise diejenige der US 6,968,907 B1 bekannt, die ebenfalls zur Bearbeitung einer bestehenden Begrünung vorgesehen sind, die jedoch nicht zum Schneiden und Zerkleinern von Pflanzen eingerichtet sind, sondern beispielsweise die Pflanzen einer Gründüngung durch Walzen und Quetschen zerstören.

Weiterhin sind Vorrichtungen mit entsprechend als Schneidwalzen ausgebildeten Walzen oder Walzenanordnungen bekannt, wobei beispielsweise die US 2,959,201 A eine selbstfahrende Maschine zum Roden von Baumbeständen beschreibt, bei der mehrere Walzenkörper mit daran angeordneten Schneiden vorgesehen sind. Auch aus der US 1,696,654 A ist eine grubber- oder eggenartige Vorrichtung zur Bearbeitung der begrünten Baumzwischenreihen in Obstplantagen bekannt, die ebenfalls eine Schneidwalze zum Schneiden der Begrünung aufweisen kann, wobei dazu spatenförmige Schneidezähne oder hackenförmige gewinkelte Klingen an einem Walzenkörper befestigt sind.

Ferner ist auch aus der EP 2 225 924 A1 eine Vorrichtung bekannt, bei der eine Schneidwalze mit Klingen vorgesehen ist. Dabei können entweder eine Vielzahl von in parallelen Reihen angeordnete Klingenelemente direkt an einem Walzenkörper angeschweißt sein oder mehrere wellenförmige Klingen können in Einschnitte von Scheibenfelgen eingesetzt sein.

Aus der DE 20 2014 104 667 U1 ist eine Schneidvorrichtung umfassend eine Schneidwalze bekannt. Die darin beschriebene Schneidwalze weist einen Walzenkörper auf, auf dessen Walzenkörperoberfläche die Schneidelemente direkt angeordnet sind, und zwar schräg zur Arbeitsrichtung der Schneidvorrichtung bzw. zur Drehachse der Schneidwalze. Nachteilig kann es bei einer derartigen Schneidvorrichtung aufgrund der direkten Anordnung der Schneidelemente auf der Walzenkörperoberfläche und des geringen Abstandes zwischen der Schneide der Schneidelemente und der Walzenkörperoberfläche zu einem Zusetzen der Schneidwalze mit Erntegut kommen. Auch können sich Gluten zwischen den schräg zueinander verlaufenden Schneidelementen festsetzen und damit die Schneidwirkung beeinträchtigen.

Zur Ökologisierung in der Landwirtschaft werden durch die EU-Agrarkommission spezielle ökologischer Flächennutzungsprogramme gefördert, welche unter dem Schlagwort "Greening" bekannt sind. Das "Greening" umfasst den Erhalt von Dauergrünlandflächen wie Wiesen und Weiden, eine größere Vielfalt beim Anbau von Feldfrüchten sowie die Bereitstellung von sogenannten ökologischen Vorrangflächen auf Ackerland. Für das Dauergrünland gilt damit zukünftig ein umfassendes Umwandlungs- und Pflugverbot. Für das übrige Dauergrünland wird ein einzelbetriebliches Autorisierungssystem eingeführt. Danach ist eine Umwandlung von Dauergrünland in andere Nutzungen künftig im Wesentlichen nur noch möglich, wenn dafür an anderer Stelle neues Dauergrünland angelegt wird. Dadurch wird die Gesamtfläche des ökologisch wertvollen Dauergrünlandes stabilisiert. Zwischenfrüchte, Begrünungen, Winterkulturen und Winterzwischenfrüchte müssen im Rahmen des Greenings bis zum 15. Februar eines Jahres auf der Fläche belassen werden. Dadurch ergibt sich das Problem, dass die bestehende Begrünung, beispielsweise Kreuzblütler wie der Senf, vor der Neuansaat der landwirtschaftlichen Nutzfläche im Frühjahr effektiv zerkleinert werden müssen, was eine zuverlässige Schneidwirkung bezogen auf unterschiedlichste Zwischenfrüchte und Begrünungen der Bodenbearbeitungsvorrichtungen erfordert.

Ausgehend von dem voranstehend genannten Stand der Technik liegt der Erfindung die Aufgabe zugrunde, eine Bodenbearbeitungsvorrichtung aufzuzeigen, welche eine zuverlässige Schneid- und Zerkleinerungswirkung unabhängig von der Beschaffenheit der Zwischenfrüchte und Begrünungen aufweist. Die Aufgabe wird durch eine Bodenbearbeitungsvorrichtung gemäß dem Patentanspruch 1 gelöst.

Der wesentliche Aspekt der erfindungsgemäßen Bodenbearbeitungsvorrichtung ist darin zu sehen, dass die Schneidmesserelemente in mehreren senkrecht zur Drehachse verlaufenden und entlang der Drehachse annähernd gleichmäßig verteilten Ebenen angeordnet sind, und zwar derart, dass die Schneidabschnitte der Schneidmesserelemente parallel zur Drehachse orientiert sind. Die Schneidmesserelemente sind somit in Teilbreiten auf den Walzenkörper befestigt und gleichmäßig über die Walzenoberfläche verteilt, wobei die Schneidabschnitte der Schneidemesserelemente axial zur Drehachse des Walzenkörpers orientiert sind. Hierdurch wird eine besonders effektive Schneidleistung erreicht. Vorzugsweise sind die Schneidmesserelemente aus einem Flachstahlmaterial hergestellt.

Die Schneidwalze weist erfindungsgemäß einen Walzenkörper mit mehreren speichenartig davon nach außen abstehenden Halteelementen auf, wobei jeweils ein Halteelement zur freiendseitigen Aufnahme zumindest eines Schneidmesserelementes ausgebildet ist. Die Schneidmesserelemente sind damit beabstandet zum Walzenkörper am freiendseitigen Ende eines Halteelementes angeordnet. Hierdurch wird ein Festsetzen der gebildeten Freiräume effektiv vermieden. Die Schneidmesserelemente weisen einen trapezförmigen Querschnitt auf, wobei die längere Längsseite des Trapezes den Schneidabschnitt bildet und dem Schneidabschnitt gegenüberliegend ein Verbindungsabschnitt vorgesehen ist, mit dem das Schneidmesserelement flächig am Halteelement anliegt. Erfindungsgemäß ist ferner jedes Schneidmesserelement mittels einer kraft- und/oder formschlüssigen Verbindung jeweils lösbar mit dem Halteelement verbunden. Hierdurch ist ein erleichterter Austausch möglich. Die Schneidmesserelemente sind ferner aus einem Bandstahl hergestellt und der Walzenkörper ist durch ein Nabenrohr aus Metall gebildet.

Weiterhin vorteilhaft weist der Trägerrahmen zumindest einen sich parallel zur Drehachse über die Arbeitsbreite der Schneidwalze erstreckenden Querträgerrahmenabschnitt auf, der unterhalb einer die Drehachse aufnehmenden Horizontalebene angeordnet ist und in Arbeitsrichtung der Schneidwalze vorgeschaltet ist.

Auch können zwei oder mehrere Schneidwalzen vorgesehen sein, die in Arbeitsrichtung hintereinander jeweils um ein Drehachse drehbar am Trägerrahmen montiert sind. Vorzugsweise sind bei zwei oder mehreren Schneidwalzen deren Schneidmesseranordnungen bzw. Schneidmesserelemente auf Lücke zueinander angeordnet.

Die Schneidmesserelemente sind besonders vorteilhaft radial beabstandet zur Drehachse angeordnet, und zwar derart, dass der Abstand der Schneidabschnitte der Schneidmesserelemente zur Drehachse gleich oder annähernd gleich ist und die Schneidabschnitte den äußeren Rotationsdurchmesser der Schneidwalze festlegen. Die in einer Ebene angeordneten Schneidmesserelemente sind in einer bevorzugten Ausführungsvariante gleichmäßig um die Drehachse verteilt angeordnet, und zwar derart, dass zwei benachbarte Schneidmesserelemente näherungsweise denselben Abstand zueinander aufweisen.

Vorteilhaft ist der Walzenkörper durch ein Nabenrohr gebildet, um eine entsprechende Druckbelastung auf die Schneidmesserelemente sowie die umgeknickte Grünpflanzen bzw. Pflanzenreste bereitstellen zu können.

Vorteilhaft bilden die in einer Ebene angeordneten Schneidmesserelemente eine im Querschnitt sternförmige Schneidmesseranordnung aus, wobei die Schneidmesserelemente zumindest zweier entlang der Drehachse aufeinander folgender Schneidmesseranordnungen auf Lücke zueinander angeordnet sind und/oder deren Schneidabschnitte entlang der Drehachse zumindest abschnittsweise überlappen.

Auch können die im Querschnitt sternförmigen Schneidmesseranordnungen beabstandet zueinander entlang der Drehachse angeordnet sein, und zwar derart, dass zwischen den aufeinanderfolgenden Schneidelementen zweier benachbarten Schneidmesseranordnungen ein Freiraum entsteht. Bei dieser Ausführungsvariante können am Querträgerabschnitt des Trägerrahmens noch zusätzliche zinkenartige Flachstahlelemente angeordnet sein, die sich entgegen der Arbeitsrichtung in Richtung der nachfolgenden Schneidwalze erstrecken und sich ausgehend vom Querträgerrahmenabschnitt des Trägerrahmens schräg nach unten in den Freiraum zwischen zwei Schneidmesseranordnungen erstrecken und/oder in den äußeren Rotationsdurchmesser der Schneidwalze eingreifen.

Weiterhin vorteilhaft können die Schneidabschnitte der Schneidelemente der Schneidmesseranordnungen auf einer parallel zur Drehachse verlaufenden Geraden angeordnet sind, und zwar durch die Freiräume beabstandet zueinander.

Vorteilhaft weist eine Schneidmesseranordnung mehrere, vorzugsweise 8 bis 24 Schneidmesserelemente in einer Ebene auf.

Die Schneidwalze weist beispielsweise einen äußeren Rotationsdurchmesser zwischen 500mm und 800mm, vorzugsweise zwischen 550mm und 650mm auf, wobei der Durchmesser des Walzenkörpers zwischen 250mm und 500mm und die Breite des Schneidabschnittes eines Schneidelementes zwischen 200mm und 400mm beträgt.

Die Ausdrucke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: eine schematische Draufsicht auf eine erfindungsgemäße Bodenbearbeitungsvorrichtung,

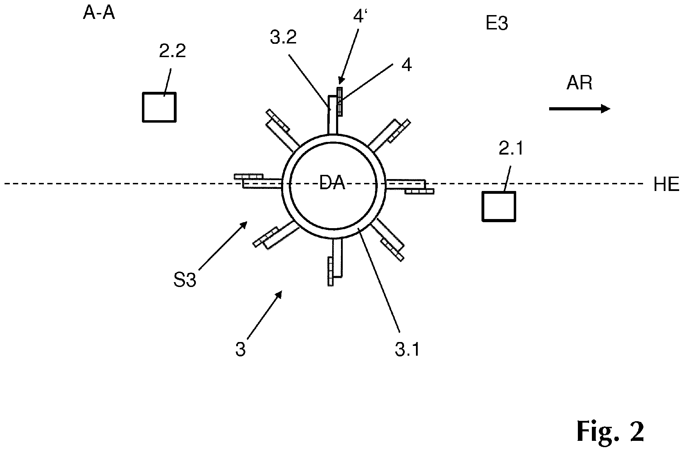

- Fig. 2: eine schematische Schnittdarstellung entlang der Schnittlinie A-A der erfindungsgemäßen Bodenbearbeitungsvorrichtung gemäß Figur 1,
- Fig. 3: eine schematische Draufsicht auf eine alternative Ausführungsvariante der erfindungsgemäßen Bodenbearbeitungsvorrichtung,
- Fig. 4: eine schematische Schnittdarstellung entlang der Schnittlinie B-B der erfindungsgemäßen Bodenbearbeitungsvorrichtung gemäß Figur 3.
- Fig. 5: eine schematische Schnittdarstellung einer weiteren Ausführungsvariante der erfindungsgemäßen Bodenbearbeitungsvorrichtung
- Fig. 6: eine schematische Draufsicht eines Ausschnittes einer erfindungsgemäßen Bodenbearbeitungsvorrichtung gemäß Figur 5 und
- Fig. 7: eine schematische Draufsicht auf eine erfindungsgemäße Bodenbearbeitungsvorrichtung mit zwei Schneidwalzen.

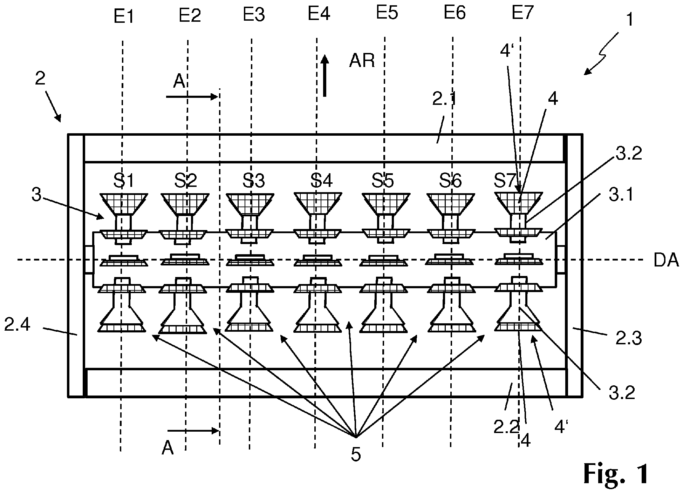

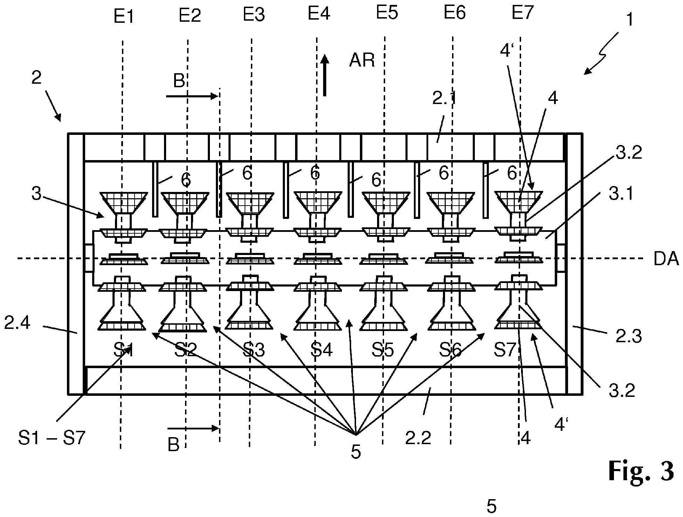

Figuren 1 und 3 zeigen beispielhaft jeweils eine schematische Draufsicht auf zwei Ausführungsvarianten einer erfindungsgemäßen Bodenbearbeitungsvorrichtung 1.

Die erfindungsgemäße Bodenbearbeitungsvorrichtung 1 ist für eine Arbeitsrichtung AR ausgelegt, welche im Wesentlichen der Fahrrichtung des Zugmaschine entspricht, an dem die Bodenbearbeitungsvorrichtung 1 moniert ist.

Die erfindungsgemäße Bodenbearbeitungsvorrichtung 1 ist vorzugsweise zum Zerkleinern von Ernterückständen und/oder der bestehenden Begrünung einer landwirtschaftlichen Nutzfläche ausgebildet und umfasst zumindest einen ein- oder mehrteiligen Trägerrahmen 2 und zumindest eine drehbar um eine senkrecht zur Arbeitsrichtung AR der Bodenbearbeitungsvorrichtung 1 verlaufende Drehachse DA an dem Trägerrahmen 2 gelagerte Schneidwalze 3, wobei die Schneidwalze 3 eine Vielzahl von einen Schneidabschnitt 4' umfassende Schneidmesserelemente 4 aufweist. Die Drehachse DA verläuft hierbei senkrecht zur Arbeitsrichtung AR der Bodenbearbeitungsvorrichtung 1.

Die Schneidwalze 3 weist einen Walzenkörper 3.1 mit mehreren speichenartig davon nach außen abstehenden Halteelementen 3.2 auf, wobei jeweils ein Halteelement 3.2 zur freiendseitigen Aufnahme zumindest eines Schneidmesserelementes 4 ausgebildet ist. Der Walzenkörper 3.1 ist durch ein Nabenrohr gebildet, welches ebenfalls aus Metall, vorzugsweise Stahl hergestellt ist. Die Schneidwalze 3 weist beispielsweise einen Rotationsdurchmesser zwischen 500mm und 800mm, vorzugsweise zwischen 550mm und 650mm auf. Der Durchmesser des Walzenkörpers 3.1 beträgt beispielsweise zwischen 250mm und 500mm.

Die Schneidmesserelemente 4 sind so genannte Verschleißteile und daher lösbar mit dem jeweiligen Halteelement 3.2 verbunden, vorzugsweise mittels einer formschlüssigen und/oder kraftschlüssigen Verbindung. In einer bevorzugten Ausführungsvariante sind die Schneidmesserelemente 4 über eine Schraubverbindung am freien Ende der Halteelemente 3.2 befestigt.

Ein Schneidmesserelement 4 ist aus einem flachen Metall hergestellt, und zwar aus Bandstahl. Das Schneidmesserelement 4 weist einen trapezförmigen Querschnitt auf, wobei die längere Längsseite des Trapezes den Schneidabschnitt 4' bildet. Der Schneidabschnitt 4' ist vorzugsweise gerade ausgebildet und verjüngt sich zum freien Ende hin. Dem Schneidabschnitt 4' gegenüberliegend ist ein Verbindungsabschnitt vorgesehen, mit dem das Schneidmesserelement 4 zumindest am Haltelement 3.2 anliegt, und zwar vorzugsweise flächig. Die Breite des Schneidabschnittes 4' eines Schneidelementes 4 beträgt beispielsweise zwischen 200mm und 400mm, vorzugsweise zwischen 200mm und 250mm.

Erfindungsgemäß sind die Schneidmesserelemente 4 in mehreren senkrecht zur Drehachse DA verlaufenden und entlang der Drehachse DA annähernd gleichmäßig verteilten Ebenen E1 bis E7 angeordnet, und zwar derart, dass die Schneidabschnitte 4' der Schneidmesserelemente 4 parallel zur Drehachse DA orientiert sind. Die Schneidabschnitte 4' mehrerer entlang der Drehachse DA aufeinander folgender Schneidmesserelemente 4 verlaufen somit entlang einer virtuellen Geraden, welche parallel zur Drehachse DA orientiert ist.

Der Trägerrahmen 2, der in den Figuren beispielhaft angedeutet ist, kann über geeignete Kupplungsvorrichtungen direkt mit einer Zugmaschine, beispielsweise einem Traktor, verbunden sein. Ferner weist der Trägerrahmen 2 beispielsweise zumindest zwei gegenüberliegende Querträgerrahmenabschnitte 2.1, 2.2, welche entlang der Drehachse DA der Schneidwalze 3 und quer zur Arbeitsrichtung AR verlaufen. Die freien Enden der zwei gegenüberliegenden Querträgerrahmenabschnitte 2.1, 2.2 sind jeweils über ein und Längsträgerrahmenabschnitt 2.3, 2.4 miteinander verbunden, welche beispielsweise parallel zueinander in Arbeitsrichtung AR orientiert sind. Beispielsweise entsteht hierdurch ein in Draufsicht rechteckförmige Rahmenstruktur, wobei die gegenüberliegenden Längsträgerrahmenabschnitt 2.3, 2.4, die gegenüberliegenden freien Enden der Schneidwalze 3 aufnehmen. Der Trägerrahmen 2 ist vorzugsweise aus Metall, insbesondere Stahl hergestellt, wobei die Querträgerrahmenabschnitte 2.1, 2.2 durch rohrartige Metallträgerelemente und die Längsträgerrahmenabschnitt 2.3, 2.4 durch plattenartige Metallträgerelemente gebildet sind, welche miteinander fest verbunden, vorzugsweise miteinander verschweißt sind.

Vorteilhaft erstreckt sich der Querträgerabschnitt 2.1 des Trägerrahmens 2 parallel zur Drehachse DA über die Arbeitsbreite der Schneidwalze 3, und zwar ist dieser unterhalb einer die Drehachse DA aufnehmenden Horizontalebene HE angeordnet und in Arbeitsrichtung AR der Schneidwalze 3 vorgeschaltet. Durch diese spezielle Höhenanordnung des Querträgerabschnittes 2.1 werden im Arbeitseinsatz die zu zerschneidenden Grünpflanzen, welche noch von der Erdoberfläche nach oben wegstehen, umgeknickt und können damit leichter von der nachgeschalteten Schneidwalze 3 zerschnitten werden. Durch die spezielle Höhenanordnung wird eine Umlegefunktion für halmartige Grünpflanzen oder Erntereste bereitgestellt, welche die halmartigen Grünpflanzen oder Erntereste für den nächsten Arbeitsvorgang, nämlich das Trennen der Grünpflanzen oder Erntereste von dem bestehenden Wurzeln und/oder das Zerschneiden dessen in mehrere Bestandteile vorbereitet.

Die Schneidmesserelemente 4 sind beispielsweise radial beabstandet zur Drehachse DA angeordnet, und zwar derart, dass der Abstand der Schneidabschnitte 4' der Schneidmesserelemente 4 zur Drehachse DA gleich oder annähernd gleich ist und die Schneidabschnitte 4' den äußeren Rotationsdurchmesser der Schneidwalze 3 festlegen. Die in einer Ebene E1 bis E7 angeordneten Schneidmesserelemente 4 sind ferner vorzugsweise gleichmäßig um die Drehachse DA verteilt angeordnet, und zwar derart, dass zwei benachbarte Schneidmesserelemente 4 näherungsweise denselben Abstand zueinander aufweisen und beanstandet zum Walzenkörper 3.1 am freiendseitigen Ende eines Halteelementes 3.2 angeordnet sind.

Die in einer Ebene E1 bis E7 angeordneten Schneidmesserelemente 4 bilden eine im Querschnitt sternförmige Schneidmesseranordnung S1 bis S7 aus, wobei die Schneidmesserelemente 4 zumindest zweier entlang der Drehachse DA aufeinander folgender Schneidmesseranordnungen S1 bis S7 auf Lücke zueinander angeordnet sind und/oder deren Schneidabschnitte 4' entlang der Drehachse DA zumindest abschnittsweise überlappen.

Die im Querschnitt sternförmigen Schneidmesseranordnungen S1 bis S7 sind vorzugsweise beabstandet zueinander entlang der Drehachse DA angeordnet, und zwar derart, dass zwischen den aufeinander folgender Schneidelementen 4 zweier benachbarten Schneidmesseranordnungen S1 bis S7 ein Freiraum 5 entsteht. Eine Schneidmesseranordnung S1 bis S7 weist jeweils mehrere, vorzugsweise 8 bis 24 Schneidmesserelemente 4 in einer Ebene E1 bis E7 auf.

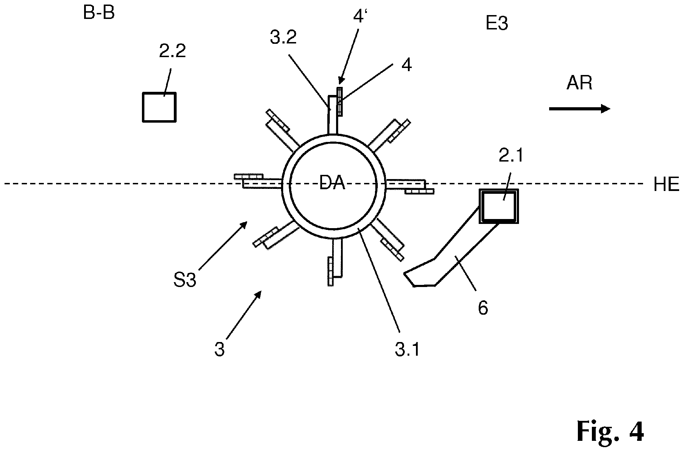

In der alternativen Ausführungsvariante gemäß der Figuren 3 und 4 sind unterschiedlich zu der Ausführungsvariante gemäß Figur 1 und 3 am Querträgerrahmenabschnitt 2.1 des Trägerrahmens 2 zinkenartige Flachstahlelemente 6 angeordnet sind, die sich entgegen der Arbeitsrichtung AR in Richtung der nachfolgenden Schneidwalze 3 und ausgehend vom Querträgerrahmenabschnitt 2.1 des Trägerrahmens schräg nach unten in den Freiraum 5 zwischen zwei Schneidmesseranordnungen S1 bis S7 erstrecken. Damit greifen die freien Enden der zinkenartigen Flachstahlelemente 6 in den Rotationsdurchmesser der Schneidwalze 3 ein.

Der Abstand der Schneidabschnitte 4' zu der Oberfläche des Walzenkörpers 3.1 beträgt vorzugsweise mindestens 150mm, beispielsweise zwischen 150mm und 300mm.

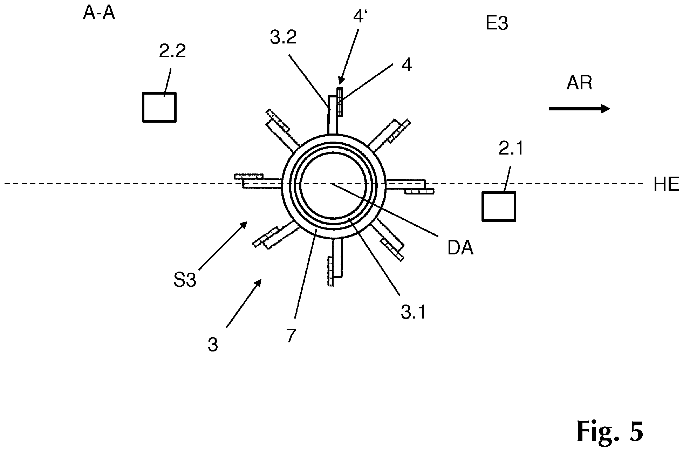

In einer weiteren alternativen Ausführungsvariante gemäß der Figur 5 sind die einer jeden Ebene E1 bis E7 zugeordneten Schneidemesseranordnungen S1 bis S7 an einem separaten Trägerelement 7 vorgesehen, das jeweils drehbeweglich, d.h. rotierbar, am Walzenkörper 3.1 angeordnet ist. Insbesondere kann das Trägerelement 7 als ein den Walzenkörper 3.1 konzentrisch, also koaxial, umschließender Ringkörper ausgebildet sein, an dessen Außendurchmesser die mehreren speichenartig davon nach außen abstehenden Haltelemente 3.2 angeordnet sind, während der Innendurchmesser des Trägerelementes 7 den Außendurchmesser des Walzenkörpers 3.1 ringartig umschließt. Hierbei kann vorgesehen sein, dass der Innendurchmesser des Trägerelements 7 im Verhältnis zum Außendurchmesser des Walzenkörpers um bis zu 25% größer ausgebildet ist.

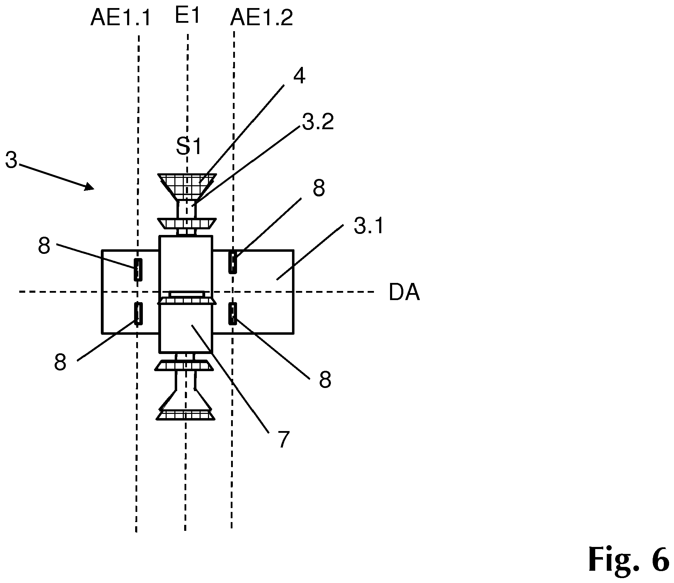

In Figur 6 ist eine schematische Draufsicht eines Ausschnittes einer erfindungsgemäßen Bodenbearbeitungsvorrichtung 1 gemäß Figur 5 gezeigt, die nur die schematisch die Schneidmesseranordnung S1 der Ebene E1 abbildet. Um die separaten Trägerelemente 7 in einem definierten Abstand zueinander entlang der Drehachse DA anordnen zu können, derart dass zwischen den aufeinanderfolgenden Schneidelementen 4 zweier benachbarter Schneidmesseranordnungen S1 bis S7 der Freiraum 5 verbleibt, können an dem Walzenkörper 3.1 beidseitig eines jeden Trägerelementes 7 Anschläge 8 vorgesehen sein, die die Vertikalbeweglichkeit des Trägerelements 7 entlang des Walzenkörper 3.1 mechanisch begrenzen. Vorzugsweise sind die Anschläge 8 jeweils beidseitig eines jeden Tragelementes 7 in einer parallel zu der entsprechenden Ebene E1 bis E7 aufgespannten Anschlagebene AE 1.1, AE 1.2 bis AE 7.1, AE 7.2, von denen in der Figur 6 nur die der Ebene E1 zugeordneten Anschlagebenen AE 1.1 und AE 1.2 gezeigt sind, angeordnet.

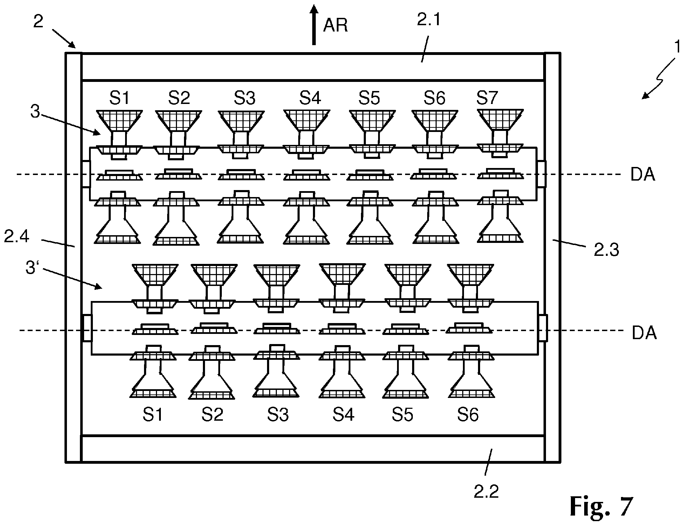

In einer weiteren Ausführungsvariante der erfindungsgemäßen Bodenbearbeitungsvorrichtung 1 gemäß Figur 7 sind zumindest zwei Schneidwalzen 3, 3' im Trägerahmen 2 aufgenommen, und zwar in Arbeitsrichtung AR aufeinander folgend. Die erste Schneidwalze 3 weist im vorliegenden Ausführungsbeispiel ein erste bis siebte Schneidelementanordnung S1 bis S7 und die zweite Schneidwalze 3' eine erste bis sechste Schneidelementanordnung S1 bis S6 auf. Vorzugsweise sind die Schneidelementanordnungen S1 bis S7 der beiden Schneidwalzen 3 auf Lücke zueinander angeordnet, d.h. entlang der Arbeitsrichtung AR ist jeweils eine Schneidelementanordnung S1 bis S6 der zweiten Schneidwalze 3' jeweils zwischen zwei benachbarten Schneidelementanordnung S1 bis S7 der ersten Schneidwalze 3 angeordnet. Auch kann der Abstand der beiden Schneidwalzen 3, 3' in Arbeitsrichtung AR zueinander derart gewählt sein, dass eine Schneidelementanordnung S1 bis S6 der zweiten Schneidwalze 3' in den Zwischenraum zwischen zwei benachbarte Schneidelementanordnungen S1 bis S7 der ersten Schneidwalze 3 eingreifen. Im Vergleich zur Ausführungsvariante gemäß der Figuren 1 und 3 werden somit die Schneidmesserelemente 4 auf zwei oder mehrere Schneidwalzen 3, 3' verteilt.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrunde liegend Erfindungsgedanke verlassen wird.

### Bezugszeichenliste

- 1: Bodenbearbeitungsgerät
- 2: Trägerrahmen
- 2.1: Querträgerrahmenabschnitt
- 2.2: Querträgerrahmenabschnitt
- 2.3: Längsträgerrahmenabschnitt
- 2.4: Längsträgerrahmenabschnitt
- 3,3': Schneidwalze
- 3.1: Walzenkörper
- 3.2: Halteelemente
- 4: Schneidmesserelement
- 4': Schneidabschnitt
- 5: Freiraum
- 6: zinkenartige Flachstahlelemente

- AR: Arbeitsrichtung
- DA: Drehachse
- E1 - E7: erste bis siebte Ebene
- S1 - S7: Schneidelementanordnungen
- HE: Horizontalebene

## Patentansprüche

1. Bodenbearbeitungsvorrichtung (1) zum Zerkleinern von Ernterückständen oder der bestehenden Begrünung einer landwirtschaftlichen Nutzfläche umfassend zumindest einen Trägerrahmen (2) und zumindest eine drehbar um eine senkrecht zur Arbeitsrichtung (AR) der Bodenbearbeitungsvorrichtung (1) verlaufende Drehachse (DA) an dem Trägerrahmen (2) gelagerte Schneidwalze (3), bei der die Schneidwalze (3) eine Vielzahl von einen Schneidabschnitt (4') umfassende Schneidmesserelemente (4) aufweist, wobei die Schneidmesserelemente (4) in mehreren senkrecht zur Drehachse (DA) verlaufenden und entlang der Drehachse (DA) annähernd gleichmäßig verteilten Ebenen (E1 bis E7) angeordnet sind, und zwar derart, dass die Schneidabschnitte (4') der Schneidmesserelemente (4) parallel zur Drehachse (DA) orientiert sind, wobei die Schneidwalze (3, 3') einen Walzenkörper (3.1) mit mehreren speichenartig davon nach außen abstehenden Halteelementen (3.2) aufweist, wobei jeweils ein Halteelement (3.2) zur freiendseitigen Aufnahme zumindest eines Schneidmesserelementes (4) ausgebildet ist, und wobei die Schneidmesserelemente (4) beabstandet zum Walzenkörper (3.1) am freiendseitigen Ende eines Halteelementes (3.2) angeordnet und jeweils lösbar mittels einer kraft- und/oder formschlüssigen Verbindung mit dem Halteelement (3.2) verbunden sind, wobei die Schneidmesserelemente (4) einen trapezförmigen Querschnitt aufweisen, wobei die längere Längsseite des Trapezes den Schneidabschnitt (4') bildet und dem Schneidabschnitt (4') gegenüberliegend ein Verbindungsabschnitt vorgesehen ist, mit dem das Schneidmesserelement (4) flächig am Halteelement (3.2) anliegt, **dadurch gekennzeichnet, dass** die Schneidmesserelemente (4) aus einem Bandstahl hergestellt sind und wobei der Walzenkörper (3.1) durch ein Nabenrohr aus Metall gebildet ist.

2. Bodenbearbeitungsvorrichtung nach Anspruch 1, **dadurch gekennzeichnet, dass** der Trägerrahmen (2) zumindest einen sich parallel zur Drehachse (DA) über die Arbeitsbreite der Schneidwalze (3) erstreckenden Querträgerrahmenabschnitt (2.1) aufweist, der unterhalb einer die Drehachse (DA) aufnehmenden Horizontalebene (HE) angeordnet ist und in Arbeitsrichtung (AR) der Schneidwalze (3) vorgeschaltet ist und/oder dass zumindest zwei drehbar um senkrecht zur Arbeitsrichtung (AR) der Bodenbearbeitungsvorrichtung (1) verlaufende Drehachsen (DA) an dem Trägerrahmen (2) gelagerte Schneidwalzen (3, 3') vorgesehen sind.

3. Bodenbearbeitungsvorrichtung nach Anspruch 1 oder 2, **dadurch gekennzeichnet, dass** die Schneidmesserelemente (4) radial beabstandet zur Drehachse (DA) angeordnet sind, und zwar derart, dass der Abstand der Schneidabschnitte (4') der Schneidmesserelemente (4) zur Drehachse (DA) gleich oder annähernd gleich ist und die Schneidabschnitte (4') den äußeren Rotationsdurchmesser der Schneidwalze (3) festlegen.

4. Bodenbearbeitungsvorrichtung nach einem der Ansprüche 1 bis 3, **dadurch gekennzeichnet, dass** die in einer Ebene (E1 bis E7) angeordneten Schneidmesserelemente (4) gleichmäßig um die Drehachse (DA) verteilt angeordnet sind, und zwar derart, dass zwei benachbarte Schneidmesserelemente (4) näherungsweise denselben Abstand zueinander aufweisen und/oder dass bei zwei oder mehreren Schneidwalzen (3, 3') die Schneidmesserelemente (4) auf Lücke zueinander angeordnet sind.

5. Bodenbearbeitungsvorrichtung nach einem der Ansprüche 1 bis 4, **dadurch gekennzeichnet, dass** die in einer Ebene (E1 bis E7) angeordneten Schneidmesserelemente (4) eine im Querschnitt sternförmige Schneidmesseranordnung (S1 - S7) bilden und/oder dass die Schneidmesserelemente (4) zumindest zweier entlang der Drehachse (DA) aufeinander folgender Schneidmesseranordnungen (S1 - S7) auf Lücke zueinander angeordnet sind und/oder deren Schneidabschnitte (4') entlang der Drehachse (DA) zumindest abschnittsweise überlappen.

6. Bodenbearbeitungsvorrichtung nach Anspruch 5, **dadurch gekennzeichnet, dass** die im Querschnitt sternförmigen Schneidmesseranordnungen (S1 - S7) beabstandet zueinander entlang der Drehachse (DA) angeordnet sind, und zwar derart, dass zwischen den aufeinander folgenden Schneidmesserelementen (4) zweier benachbarten Schneidmesseranordnungen (S1 - S7) ein Freiraum (5) entsteht.

7. Bodenbearbeitungsvorrichtung nach Anspruch 6, **dadurch gekennzeichnet, dass** am Querträgerabschnitt des Trägerrahmens zinkenartige Flachstahlelemente (6) angeordnet sind, die sich entgegen der Arbeitsrichtung (AR) in Richtung der nachfolgenden Schneidwalze (3) erstrecken und sich ausgehend vom Querträgerrahmenabschnitt (2.1) des Trägerrahmens (2) schräg nach unten in den Freiraum (5) zwischen zwei Schneidmesseranordnungen (S1 - S7) erstrecken und/oder in den äußeren Rotationsdurchmesser der Schneidwalze (3) eingreifen.

8. Bodenbearbeitungsvorrichtung nach Anspruch 6 oder 7, **dadurch gekennzeichnet, dass** die Schneidabschnitte (4') der Schneidmesserelemente (4) der Schneidmesseranordnungen (S1 - S7) auf einer parallel zur Drehachse (DA) verlaufenden Geraden angeordnet sind.

9. Bodenbearbeitungsvorrichtung nach einem der Ansprüche 7 bis 8, **dadurch gekennzeichnet, dass** eine Schneidmesseranordnung (S1 - S7) mehrere, vorzugsweise 8 bis 24 Schneidmesserelemente (4) in einer Ebene (E1 bis E7) aufweist.

10. Bodenbearbeitungsvorrichtung nach einem der Ansprüche 1 bis 9, **dadurch gekennzeichnet, dass** die Schneidwalze (3, 3') einen äußeren Rotationsdurchmesser zwischen 500mm und 800mm, vorzugsweise zwischen 550mm und 650mm aufweist.

11. Bodenbearbeitungsvorrichtung nach einem der Ansprüche 1 bis 10, **dadurch gekennzeichnet, dass** der Walzenkörper (3.1) einen Durchmesser zwischen 250mm und 500mm aufweist.

12. Bodenbearbeitungsvorrichtung nach einem der Ansprüche 1 bis 11, **dadurch gekennzeichnet, dass** die Breite des Schneidabschnittes (4') eines Schneidmesserelementes (4) zwischen 200mm und 400mm aufweist.

## Claims

1. A soil cultivation device (1), for chopping crop residues or the existing vegetation of an agricultural area comprising at least a support frame (2) and at least a cutting roller (3) that is rotatably mounted on the support frame (2) being rotatable about an axis of rotation (DA) extending perpendicularly to the working direction (AR) of the soil cultivation device (1), wherein the cutting roller (3) comprises a plurality of cutting knife elements (4) comprising a cutting section (4'), wherein the cutting knife elements (4) are arranged in multiple planes (E1 to E7) which extend perpendicularly to the axis of rotation (DA) and are approximately evenly distributed along the axis of rotation (DA), namely in such a manner that the cutting sections (4') of the cutting knife elements (4) are orientated parallel to the axis of rotation (DA), wherein the cutting roller (3, 3') comprises a roller body (3.1) having a plurality of holding elements (3.2) projecting spoke-like from the roller body towards the outside, wherein a holding element (3.2) in each case is designed for the free end-side receiving of at least one cutting knife element (4), and wherein the cutting knife elements (4) are arranged spaced apart on the roller body (3.1) on the free end-side end of a holding element (3.2) and are each detachably connected to the holding element (3.2) by means of a force-fitting and/or form-fitting connection, wherein the cutting knife elements (4) have a trapezium-shaped cross section, wherein the longer longitudinal side of the trapezium forms the cutting section (4') and located opposite the cutting section (4') a connecting section is provided, with which the cutting knife element (4) lies flat against the holding element (3.2), **characterized in that** the cutting knife elements (4) are produced from a strip steel and wherein the roller body (3.1) is formed by a hub tube of metal.

2. Soil cultivation device according to claim 1, **characterized in that** the support frame (2) comprises at least one cross member frame section (2.1) extending parallel to the axis of rotation (DA) over the working width of the cutting roller (3), which is arranged below a horizontal plane (HE) receiving the axis of rotation (DA) and in the working direction (AR) is connected upstream of the cutting roller (3) and/or **in that** at least two cutting rollers (3, 3') are provided which are rotatably mounted on the support frame (2) being rotatable about axes of rotation (DA) extending perpendicularly to the working direction (AR) of the soil cultivation device (1).

3. Soil cultivation device according to claim 1 or 2, **characterized in that** the cutting knife elements (4) are arranged radially spaced apart from the axis of rotation (DA), namely in such a manner that the distance of the cutting sections (4') of the cutting knife elements (4) to the axis of rotation (DA) is equal or approximately equal and the cutting sections (4') define the outer rotation diameter of the cutting roller (3).

4. Soil cultivation device according to any one of claims 1 to 3, **characterized in that** the cutting knife elements (4) arranged in a plane (E1 to E7) are arranged evenly distributed about the axis of rotation (DA), namely in such a manner that two adjacent cutting knife elements (4) have approximately the same distance from one another and/or **in that** in the case of two or more cutting rollers (3, 3') the cutting knife elements (4) are arranged staggered relative to one another.

5. Soil cultivation device according to any one of claims 1 to 4, **characterized in that** the cutting knife elements (4) arranged in a plane (E1 to E7) form a cutting knife arrangement (S1 - S7) that is star-shaped in the cross section and/or **in that** the cutting knife elements (4) of at least two consecutive cutting knife arrangements (S1 - S7) are arranged staggered along the axis of rotation (DA) and/or their cutting sections (4') overlap along the axis of rotation (DA) at least in sections.

6. Soil cultivation device according to claim 5, **characterized in that** the cutting knife arrangements (S1 - S7) that are star-shaped in the cross section are arranged spaced apart from one another along the axis of rotation (DA), namely in such a manner that between the consecutive cutting knife elements (4) of two adjacent cutting knife arrangements (S1 - S7) a free space (5) is created.

7. Soil cultivation device according to claim 6, **characterized in that** on the cross member section of the support frame, tine-like flat steel elements (6) are arranged, which extend opposite the working direction (AR) in the direction of the following cutting roller (3) and, emanating from the cross member frame section (2.1) of the support frame (2) extend obliquely downwards into the free space (5) between two cutting knife arrangements (S1 - S7) and/or engage into the outer rotation diameter of the cutting roller (3).

8. Soil cultivation device according to claim 6 or 7, **characterized in that** the cutting sections (4') of the cutting knife elements (4) of the cutting knife arrangements (S1 - S7) are arranged on a straight line running parallel to the axis of rotation (DA).

9. Soil cultivation device according to any one of claims 7 to 8, **characterized in that** a cutting knife arrangement (S1 - S7) comprises a multiple, preferentially 8 to 24 cutting knife elements (4) in a plane (E1 to E7).

10. Soil cultivation device according to any one of claims 1 to 9, **characterized in that** the cutting roller (3, 3') has an outer rotation diameter between 500 mm and 800 mm, preferentially between 550 mm and 650 mm.

11. Soil cultivation device according to any one of claims 1 to 10, **characterized in that** the roller body (3.1) has a diameter between 250 mm and 500 mm.

12. Soil cultivation device according to any one of claims 1 to 11, **characterized in that** the width of the cutting section (4') of a cutting knife element (4) is between 200 mm and 400 mm.

## Revendications

1. Dispositif de traitement de sol (1) pour broyer des résidus de récolte ou de végétation existante d'une surface utile agricole comprenant au moins un cadre de support (2) et au moins un cylindre de coupe (3) logé sur le cadre de support (2) pouvant tourner autour d'un axe de rotation (DA) passant perpendiculairement au sens du travail (AR) du dispositif de traitement de sol (1), dans lequel le cylindre de coupe (3) comporte une pluralité d'éléments de couteaux de coupe (4) comprenant une section de coupe (4'), sachant que les éléments de couteaux de coupe (4) sont disposés dans plusieurs plans (E1 à E7) passant perpendiculairement à l'axe de rotation (DA) et répartis à peu près uniformément le long de l'axe de rotation (DA) et de telle manière que les sections de coupe (4') des éléments de couteaux de coupe (4) sont orientés parallèlement à l'axe de rotation (DA), sachant que le cylindre de coupe (3, 3') comporte un corps de cylindre (3.1) avec plusieurs éléments de support (3.2) en forme de rayon faisant saillie vers l'extérieur de celui-ci, sachant respectivement qu'un élément de support (3.2) est constitué pour le logement côté extrémité libre d'au moins un élément de couteaux de coupe (4) et sachant que les éléments de couteaux de coupe (4) sont disposés à distance du corps de cylindre (3.1) à l'extrémité côté extrémité libre d'un élément de support (3.2) et respectivement reliés de façon amovible au moyen d'un assemblage par conformité de force et/ou de forme à l'élément de support (3.2), les éléments de couteaux de coupe (4) comportent une section trapézoïdale, sachant que le côté longitudinal plus long du trapèze forme la section de coupe (4') et qu'une section de liaison opposée à la section de coupe (4') est prévue avec laquelle l'élément de couteaux de coupe (4) vient s'appliquer en surface à l'élément de support (3.2), **caractérisé en ce que** les éléments de couteau de coupe (4) sont fabriqués à partir d'un feuillard d'acier et sachant que le corps de cylindre (3.1) est formé par un tube de moyeu en métal.

2. Dispositif de traitement de sol selon la revendication 1, **caractérisé en ce que** le cadre de support (2) comporte au moins une section de cadre de support transversale (2.1) s'étendant parallèlement à l'axe de rotation (DA) sur la largeur de travail du cylindre de coupe (3), qui est disposée sous un plan horizontal (HE) logeant l'axe de rotation (DA) et est montée en amont du cylindre de coupe (3) dans le sens du travail (AR) et/ou **en ce qu'**au moins deux cylindres de coupe (3, 3') logés sur le cadre de support (2) pouvant tourner autour des axes de rotation (DA) passant perpendiculairement au sens de travail (AR) du dispositif de traitement de sol (1) sont prévus.

3. Dispositif de traitement de sol selon la revendication 1 ou 2, **caractérisé en ce que** les éléments de couteaux de coupe (4) sont disposés radialement à distance de l'axe de rotation (DA) et de telle manière que la distance entre les sections de coupe (4') des éléments de couteaux de coupe (4) et l'axe de rotation (DA) est égale ou à peu près égale et les sections de coupe (4') définissent le diamètre de rotation extérieur du cylindre de coupe (3).

4. Dispositif de traitement de sol selon l'une quelconque des revendications 1 à 3, **caractérisé en ce que** les éléments de couteaux de coupe (4) disposés dans un plan (E1 à E7), sont disposés uniformément répartis autour de l'axe de rotation (DA) et de telle manière que deux éléments de couteaux de coupe (4) voisins comportent à peu près le même intervalle l'un par rapport à l'autre et/ou **en ce que** pour deux ou plusieurs cylindres de coupe (3, 3'), les éléments de couteaux de coupe (4) sont disposés en chicane l'un par rapport à l'autre.

5. Dispositif de traitement de sol selon l'une quelconque des revendications 1 à 4, **caractérisé en ce que** les éléments de couteaux de coupe (4) disposés dans un plan (E1 à E7) forment un système de couteaux de coupe (S1 - S7) en forme d'étoile en section et/ou **en ce que** les éléments de couteaux de coupe (4) d'au moins deux systèmes de couteaux de coupe (S1 - S7) se succédant le long de l'axe de rotation (DA) sont disposés en chicane l'un par rapport à l'autre et/ou les sections de coupe (4') de ceux-ci chevauchent le long de l'axe de rotation (DA) au moins par section.

6. Dispositif de traitement de sol selon la revendication 5, **caractérisé en ce que** les systèmes de couteaux de coupe (S1 - S7) en forme d'étoile dans la section sont disposés à distance les uns des autres le long de l'axe de rotation (DA) et de telle manière qu'un espace libre (5) est créé entre les éléments de couteaux de coupe (4) se succédant de deux systèmes de couteaux de coupe (S1 - S7) voisins.

7. Dispositif de traitement de sol selon la revendication 6, **caractérisé en ce que** des éléments en acier plat (6) en forme de dent sont disposés sur la section de support transversale du cadre de support, qui s'étendent opposées au sens du travail (AR) en direction du cylindre de coupe (3) suivant et s'étendent en partant de la section de cadre de support transversale (2.1) du cadre de support (2), inclinés vers le bas dans l'espace libre (5) entre deux systèmes de couteaux de coupe (S1 - S7) et/ou viennent en prise dans le diamètre de rotation extérieur du cylindre de coupe (3).

8. Dispositif de traitement de sol selon l'une quelconque des revendications 6 ou 7, **caractérisé en ce que** les sections de coupe (4') des éléments de couteaux de coupe (4) des systèmes à couteaux de coupe (S1 -S7) sont disposées sur une droite passant parallèlement à l'axe de rotation (DA).

9. Dispositif de traitement de sol selon l'une quelconque des revendications 7 à 8, **caractérisé en ce qu'**un système de couteaux de coupe (S1 - S7) comporte plusieurs éléments de couteaux de coupe (4), de préférence 8 à 24, dans un plan (E1 à E7).

10. Dispositif de traitement de sol selon l'une quelconque des revendications 1 à 9, **caractérisé en ce que** le cylindre de coupe (3, 3') comporte un diamètre de rotation extérieur entre 500 mm et 800 mm, de préférence entre 550 mm et 650 mm.

11. Dispositif de traitement de sol selon l'une quelconque des revendications 1 à 10, **caractérisé en ce que** le corps de cylindre (3.1) comporte un diamètre entre 250 mm et 500 mm.

12. Dispositif de traitement de sol selon l'une quelconque des revendications 1 à 11, **caractérisé en ce que** la largeur de la section de coupe (4') d'un élément de couteaux de coupe (4) comporte entre 200 mm et 400 mm.
